Europäisches Patentamt

European Patent Office

Office européen des brevets

(11) Publication number: **0 459 759 A2**

# EUROPEAN PATENT APPLICATION

(21) Application number: **91304811.2**

(22) Date of filing: **28.05.91**

(51) Int. Cl.⁵: **G02F 1/1333**

(30) Priority: **01.06.90 JP 143581/90**

(43) Date of publication of application:
**04.12.91 Bulletin 91/49**

(84) Designated Contracting States:
**DE FR GB**

(71) Applicant: **SEIKO EPSON CORPORATION**
**4-1, Nishishinjuku 2-chome**
**Shinjuku-ku Tokyo (JP)**

(72) Inventor: **Shirahata, Kiyohiko**
**3-5, Owa, 3-chome**
**Suwa-shi, Nagano-ken (JP)**
Inventor: **Suehiro, Keiichi**
**3-5, Owa, 3-chome**
**Suwa-shi, Nagano-ken (JP)**

(74) Representative: **Miller, Joseph et al**
**J. MILLER & CO. Lincoln House 296-302 High**
**Holborn**
**London WC1V 7JH (GB)**

(54) **Liquid crystal display.**

(57)    A transparent substrate (1) for a liquid crystal display, has a plurality of layers on its surface including a layer comprising a plurality of transparent electrodes (3) and a thin film layer (4) having a surface resistivity of between 1 x 10⁶ and 1 x 10¹² Ω/sq.

FIG. 1

The present invention relates to liquid crystal displays.

The transparent electrodes and orientation films of liquid crystal displays may be damaged by the charge or discharge of static electricity with respect to the substrates. This charge or discharge is generated during the liquid crystal display manufacturing process, and can damage elements in active-matrix type liquid crystal displays considerably. Such damaged elements may cause, for example, poor orientation, thereby rendering the LCD worthless. Also, if a specific transparent electrode is electrostatically charged after the liquid crystal has been sealed, the voltage threshold of the optical properties of liquid crystal corresponding to the specific transparent electrode is altered. When the liquid crystal display is driven, a difference in display contrast appears between the electrostatically-charged electrode and an electrode which has not been electrostatically charged, thus reducing the quality of the display.

It is difficult to prevent the generation of such static electricity because of the nature of the liquid crystal display manufacturing process. A large amount of static charge is likely to be generated during various steps, particularly in the rubbing step, the step for cutting a substrate, and the step for affixing a polarizing plate.

To reduce the amount of static electricity generated, a charge-removing device is incorporated in the manufacturing process, or the humidity of the atmosphere is controlled during the manufacturing process.

Furthermore, after the liquid crystal has been sealed, additional operations are performed such as placing the liquid crystal display in a antistatic bag, or placing the liquid crystal display in a tray made of electrically-conductive or electrically-controllable resin until the liquid crystal display is connected to external circuits so that it is no longer affected by static electricity.

The conventional charge-removing device, however, does not fully remove charged static electricity during the manufacturing process, because it takes a long time for the charged static electricity to attenuate.

When the atmosphere is humidified and the relative humidity increases to 60% or more, static electricity is unlikely to be generated, but it becomes difficult to control the humidity. In addition, problems arise in that metal portions of the manufacturing machinery rust, and the leakage current increases which is attributable to moisture adhering to the surface of a substrate. The relative humidity of the atmosphere during the manufacturing process must be reduced to 50% or under in order to prevent such problems. Static electricity, however, is hardly prevented from being generated at this humidity.

It is also possible to prevent, to some extent, the liquid crystal display from being electrostatically affected by placing it in an antistatic bag or in a tray made of electrically-conductive or electrically-controllable resin. However, such operations increase man-hours as well as costs.

The prresent invention seeks to simplify the manufacturing process and to provide a liquid crystal display having excellent display quality.

Although the present invention is primarily directed to any novel integer or step, or combination of integers or steps, herein disclosed and/or as shown in the accompanying drawings, nevertheless, according to one particular aspect of the present invention to which, however, the invention is in no way restricted, there is provided a transparent substrate for a liquid crystal display, the surface of said transparent substrate having a plurality of layers including a layer comprising a plurality of transparent electrodes formed thereon; the transparent substrate being characterised in that one of said plurality of layers is a thin film layer having a surface resistivity of between $1 \times 10^6$ and $1 \times 10^{12} \Omega/sq$.

The present invention will now be described with reference to the accompanying drawings, in which:-

Figure 1 shows a cross-sectional view of a transparent substrate for a liquid crystal display according to the present invention;

Figure 2 shows a cross-sectional view of another transparent substrate for a liquid crystal display according to the present invention;

Figures 3a and 3b show respectively a cross-sectional view and a partial plan view of another transparent substrate for a liquid crystal display according to the present invention;

Figure 4 shows a cross-sectional view of another transparent substrate for a liquid crystal display according to the present invention;

Figure 5 shows a partial cross-sectional view of a liquid crystal cell comprising substrates of the type shown in Figure 1;

Figure 6 shows a partial cross-sectional view of a liquid crystal cell comprising substrates of the type shown in Figure 2; and

Figure 7 shows a partial cross-sectional view of a liquid crystal cell comprising substrates of the types shown in Figures 2 and 4.

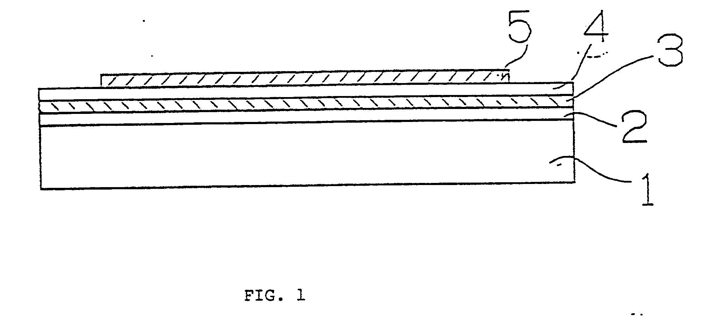

In Figure 1, numeral 1 denotes a transparent substrate, and numeral 2 denotes a passivation film. A thin film layer 4 made of tin oxide was formed on a transparent electrode 3 by a sputtering technique. The surface resistivity of the thin film layer was $2 \times 10^{11} \Omega/sq$. Experiments conducted by the inventors proved that when the surface resistivity decreased to $1 \times 16^6 \Omega$ or under, a leakage current occurred between transparent electrodes, and that when, on the other hand, the surface resistivity increased to $1 \times 10^{12} \Omega/sq$ or above, electrostatic charge was not affected. A liquid crystal display using the transparent substrate was not electrostatically charged during its manufacturing process. It was thus possible to avoid defects attributable to the charge or discharge of static electricity, with the result that the manufacturing yield increased markedly. The liquid crystal display was not electrostatically charged even after the liquid crystal had been sealed. The quality of display did not deteriorate as a result of electrostatic charge, even if the liquid crystal display was not placed in an antistatic bag.

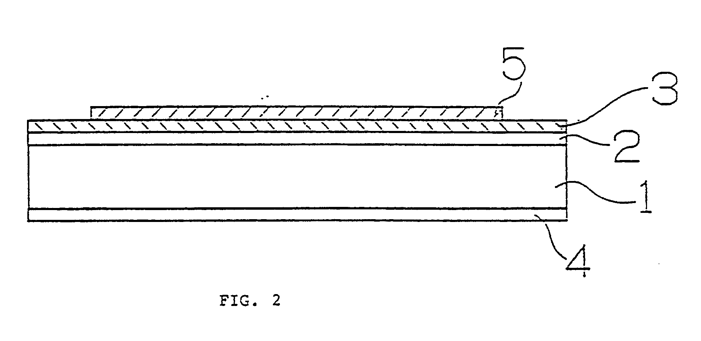

Figure 2 shows another structure of the substrate of a liquid crystal display. An ethyl alcohol liquid was applied by a roll coater onto the surface opposite to the transparent electrode 3 disposed on the transparent substrate 1 in order to form the thin film layer 4. The ethyl alcohol contained fine particles of oxide each having a length of 50-100 Å, dispersed in a silica-based inorganic binder. The thin film layer resistivity was $3 \times 10^{10} \Omega/\text{sq}$. When a liquid crystal display using the transparent substrate was manufactured, similar results as those for the embodiment shown in Figure 1 were obtained.

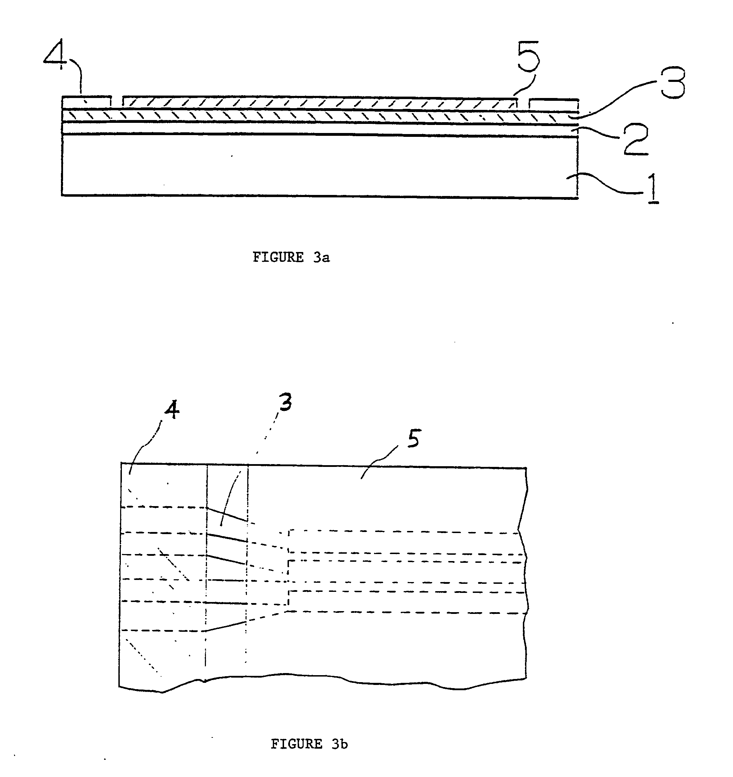

In the embodiment shown in Figures 3a and 3b a lift-off method was employed through the sputtering technique in the same manner as in the embodiment shown in Figure 1 so that thin film layers 4 of tin oxide were formed only on the terminal portions of the transparent electrode 3 to be connected to external circuits. The surface resistivity of the thin film layers was $2 \times 10^{11} \Omega/\text{sq}$. When a liquid crystal display using this transparent substrate was manufactured, similar results as those for the embodiment shown in Figure 1 were obtained.

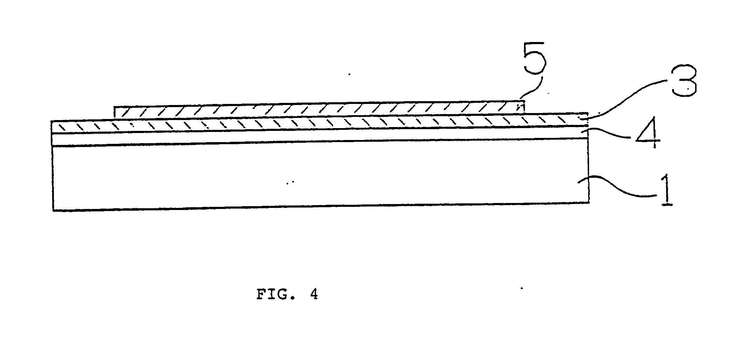

In the embodiment shown in Figure 4, numeral 1 designates a transparent substrate made of soda-lime glass. The same liquid as that used in embodiment 2 was applied by a spin coater onto the transparent substrate to form the thin film layer 4. The surface resistivity of the thin film layer was $2 \times 10^{10} \Omega/\text{sq}$. When a liquid crystal display using this transparent substrate was manufactured, similar results to those obtained for the embodiment shown in Figure 1 were obtained.

In addition, when soda-lime glass is used as the transparent substrate, a passivation film must be formed on the surface of the substrate in order to prevent an ionic component in the glass from being eluted into the liquid crystal. The thin film layer 4 in this embodiment also serves to prevent the elution of ions, thus providing passivation as well as preventing static charge.

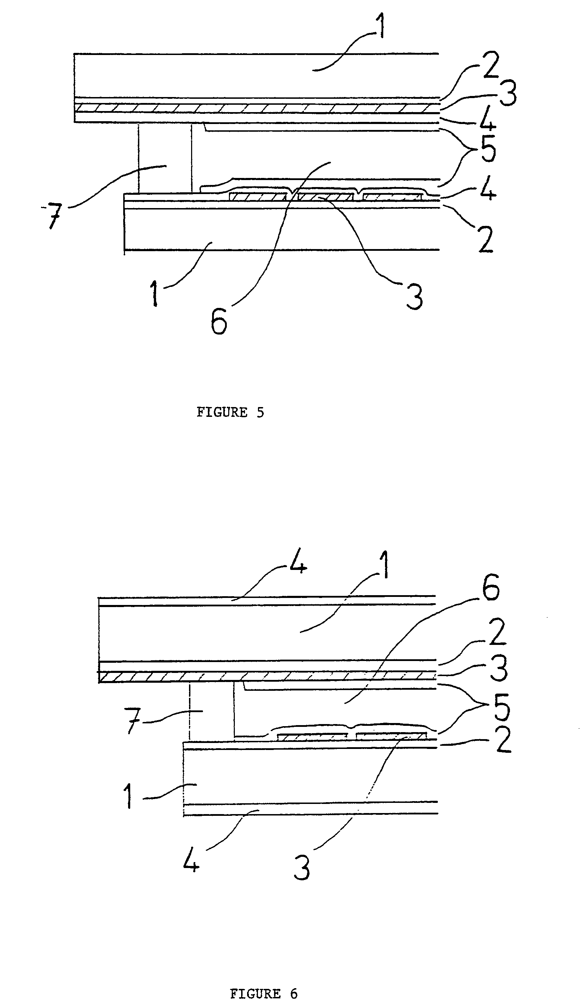

In the liquid crystal cell shown in Figure 5, liquid crystal material 6 is contained between two substrates of to the type shown in Figure 1 by a peripheral seal 7 which also serves to attach the substrates to each other.

The liquid crystal cell shown in Figure 6 shows another liquid crystal cell made from substrates of the type shown in Figure 2.

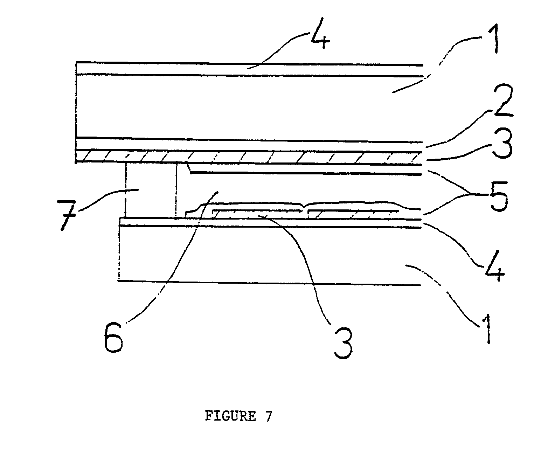

Furthermore, liquid crystal cells may be formed from substrates according to different embodiments. For example, Figure 7 shows a liquid crystal cell formed from one substrate of the type shown in Figure 2 and another substrate of the type shown in Figure 4. Alternatively, the thin film layer may be provided on only one substrate, or on different portions of each substrate.

Therefore, since a liquid crystal display according to the present invention is not electrostatically charged during its manufacturing process, the transparent electrodes and orientation film are not damaged due to the charge or discharge of static electricity, thereby remarkably increasing the manufacturing yield.

In addition, after the liquid crystal has been sealed, an antistatic effect is maintained, and the transparent electrodes are not electrostatically charged. Therefore there is no variation in display contrast caused by some transparent electrodes being electrostatically charged. The display quality of the liquid crystal display thus improves.

## Claims

1. A transparent substrate (1) for a liquid crystal display, the surface of said transparent substrate (1) having a plurality of layers including a layer comprising a plurality of transparent electrodes (3) formed thereon; the transparent substrate (1) being characterised in that one of said plurality of layers is a thin film layer (4) having a surface resistivity of between $1 \times 10^6$ and $1 \times 10^{12} \Omega/\text{sq}$.

2. A transparent substrate as claimed in claim 1 characterised in that the thin film layer (4) is formed on the transparent electrodes (3).

3. A transparent substrate as claimed in claim 2 characterised in that the thin film layer (4) is formed only on the connecting portions of the transparent electrodes (3) for connecting to external circuits.

4. A transparent substrate as claimed in claim 1 characterised in that the thin film layer (4) is formed beneath the transparent electrodes (3).

5. A transparent substrate as claimed in claim 1 characterised in that the surface of the substrate comprising the thin film layer (4) is opposite the surface of the substrate on which the transparent electrodes (3) are formed.

6. A liquid crystal display characterised by a liquid crystal sealed between a pair of transparent substrates at least one of which is a transparent substrate (1) as claimed in any preceding claim.

7. A liquid crystal display constructed by sealing liquid crystal between a pair of transparent substrates having inner surfaces on which transparent electrodes are formed, wherein the whole or a part of at least one surface of said pair of transparent substrates comprises a thin film layer whose surface resistivity is $1 \times 10^6$ to $1 \times 10^{12} \Omega/\text{sq}$.

FIG. 1

FIG. 2

FIGURE 3a

FIGURE 3b

FIG. 4

FIGURE 5

FIGURE 6

FIGURE 7